(19) Europäisches Patentamt
European Patent Office
Office européen des brevets

(11) Veröffentlichungsnummer: **0 000 029**
**B1**

(12) # EUROPÄISCHE PATENTSCHRIFT

(21) Anmeldenummer: **78100046.8**

(22) Anmeldetag: **01.06.78**

(51) Int. Cl.³: **C 08 G 18/10,**
C 08 G 18/32,
D 06 M 15/52,
C 03 C 25/00

(54) **Verfahren zur Herstellung von wässrigen Polyurethan-Dispersionen und -Lösungen und deren Verwendung zur Beschichtung von flexiblen Substraten**

(30) Priorität: **07.06.77 DE 2725589**

(43) Veröffentlichungstag der Anmeldung:
**20.12.78 Patentblatt 78/01**

(45) Bekanntmachung des Hinweises auf die Patenterteilung:
**23.07.80 Patentblatt 80/15**

(84) Benannte Vertragsstaaten:
**BE DE FR GB NL**

(56) Entgegenhaltungen:
**GB - A - 1 064 841**

(73) Patentinhaber: **Bayer AG**
**Zentralbereich Patente, Marken und Lizenzen**
**D - 5090 Leverkusen 1,**
**Bayerwerk (DE)**

(72) Erfinder: **Pedain, Josef, Dr.**
**Haferkamp 6**
**D - 5000 Köln 80 (DE)**
**Nachtkamp, Klaus, Dr.**
**Im Odinshof 17**
**D - 5060 Bergisch-Gladbach (DE)**
**Noll, Klaus, Dr.**
**Morgengraben 6**
**D - 5000 Köln 80 (DE)**
**Grammel, Jürgen, Dr.**
**Mörickestrasse 22**
**D - 4047 Dormagen 5 (DE)**

EP 0 000 029 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von wäßrigen Polyurethan-Dispersionen und -Lösungen, und deren Verwendung zur Beschichtung von flexiblen Substraten

Verfahren zur Herstellung von stabilen, wäßrigen Polyurethan-Polyharnstoff-Dispersionen sind bekannt (z.B. DT—PS 1 184 946, DT—PS 1 178 586, DT—AS 1 237 306, DT—Osen 1 495 745, 1 595 602, 1 770 068, 2 019 324, vgl. auch D. Dieterich et al, Angew. Chem. *82*, 53 (1970)). Die beschriebenen Dispersionen beruhen auf dem Prinzip, in eine makromolekulare Kette eines Polyurethan-Polyharnstoff-Moleküls hydrophile Zentren einzubauen. Diese hydrophilen Zentren oder sogenannten inneren Emulgatoren sind in den bekannten Dispersionen ionische Gruppen oder Ätherfunktionen. Die ionischen Gruppen werden entweder in das Präpolymer in Form spezieller Diole eingebaut oder als modifizierte Amine zur Kettenverlängerung der Präpolymeren eingesetzt, die je mindestens zwei endständige NCO-Funktionen besitzen.

Hochwertige Polyurethanfilme, die z.B. das für die Textilbeschichtung notwenige Wertniveau erreichen, werden bislang aus Dispersionen gewonnen, die unter Mitverwendung organischer Lösungsmittel bei der Polyaddition hergestellt werden.

Durch die Polyaddition in Lösung ist es möglich, ein hochmolekulares Polyurethan in homogener Phase aufzubauen, bevor dieses in Wasser dispergiert wird. Der Festkörper der dispersen Teilchen ist infolgedessen ebenfalls in hohem Maße homogen.

Dieses sehr weit entwickelte Verfahren, das sowohl anionische, kationische und nichtionische Emulgatorsegmente einschließt, hat den Nachteil, daß das organische Lösungsmittel in einem aufwendigen Verfahren abdestilliert und rektifiziert werden muß. Hiermit verbunden ist eine schlechte Raum-Zeit-Ausbeute beim Herstellungsprozeß. Das organische Lösungsmittel als Reaktionsmedium erhöht die Explosions- und Brandgefahr während des Herstellungsprozesses. Beim Versuch, die Herstellung solcher Produkte ohne die Mitverwendung organischer Lösungsmittel zu bewerkstelligen, erhält man bestenfalls relativ grobteilige Dispersionen, deren Filmbildungsvermögen und mechanisches Eigenschaftsbild für eine Reihe von Anwendungsbereichen nicht ausreichen.

Andererseits sind auch Verfahren bekannt geworden zur lösungsmittelfreien Herstellung von Polyurethan-Dispersionen, wie z.B. das sogenannte Schmelzdispergierverfahren (DOS 1 770 068, D. Dieterich und H. Reiff, Angew. makromol. Chem. *76*, 85 (1972)). Bei diesem Verfahren wird ein mit ionischen Gruppen modifiziertes, endständige, acylierte Aminogruppen aufweisendes Oligourethan mittels Formaldehyd in das entsprechende endständige an acylierte Aminogruppen gebundene Methylolgruppen aufweisende Oligourethan überführt, welches dann durch Wärmebehandlung unter Kondensationsreaktion der endständigen reaktiven Methylolgruppen kettenverlängert wird. Diese Kettenverlängerungsreaktion kann in Gegenwart von Wasser stattfinden, so daß unmittelbar eine wäßrige Dispersion eines Polyurethans entsteht. Dieses Verfahren eignet sich insbesondere zur Herstellung von kationisch modifizierten Polyurethanen bzw. zur Herstellung von anionischen Carboxylatgruppen aufweisenden Polyurethanen. Die erforderliche Kombination der Isocyanat-Polyadditionsreaktion mit der genannten Kettenverlängerungsreaktion über polykondensationsfähige an endständige Acylaminogruppen gebundene Methylolgruppen stellt einen im Vergleich zur bekannten Isocyanat-Polyaddition nach dem Präpolymerverfahren, bei welchem Isocyanatgruppen aufweisende Präpolymere mit den klassischen Kettenverlängerungsmitteln wie z.B. Wasser oder Diaminen umgesetzt werden, erhöhten Aufwand dar. Dieser Aufwand konnte beim Verfahren der DOS 1 770 068 damit gerechtfertigt werden, daß es erstmals gelang, Polyurethan-Dispersionen ohne Zuhilfenahme von Spezialrührern und ohne Zuhilfenahme von Emulgatoren und ohne Zuhilfenahme von Lösungsmitteln herzustellen.

In DT—OS 2 446 440 wird nun ein weiteres Verfahren beschrieben, das die lösungsmittelfreie Herstellung von Polyurethanen in wäßriger Dispersion betrifft. Danach wird ein Sulfonat- und NCO-Gruppen aufweisendes Präpolymer ohne Verwendung von Lösungsmitteln mit einer im Sinne der Isocyanat-Polyadditionsreaktion difunktionellen Verbindung mit gegenüber Isocyanatgruppen reaktionsfähigen Wasserstoffatomen umgesetzt.

Bei diesem Verfahren erfolgt die Umsetzung des NCO-Präpolymers mit der gegenüber NCO-Gruppen reaktiven Verbindung während des Dispergiervorgangs, d.h. nach vorausgegangener Lösung des Kettenverlängerers im Dispergierwasser, oder nach der Dispergierung des Präpolymers in Wasser. Das genannte Verfahren ermöglicht die Herstellung von hochwertigen, Sulfonatgruppen aufweisenden Polyurethanen in wäßriger Dispersion. Es hat allerdings den Nachteil, daß es auf Sulfonatgruppen tragende Polyurethane beschränkt ist und als Kettenverlängerungsmittel nur Wasser oder in Wasser lösliche Polyamine eingesetzt werden können.

Kennzeichnend für dieses Verfahren ist außerdem, daß die Kettenverlängerung. d.h. der Aufbau zu einem hochmolekularen Polyurethanharnstoff in heterogener Phase erfolgt. Das Kettenverlängerungsmittel — Diamin, Wasser — befindet sich in der flüssigen Phase und dringt erst im Laufe einer bestimmten Zeit bis zur Mitte des dispergierten Teilchens vor. Es liegt auf der Hand, daß das Kettenverlängerungsmittel, d.h. das in Wasser gelöste Diamin zunächst in den äußeren Bereichen des dispergierten Teilchens abreagiert. Die Konzentration des Kettenverlängererers nimmt zum Zentrum des Teilchens stetig ab. Es werden deshalb nach diesem Verfahren Dispersionen erhalten, deren Festkörperteilchen nicht homogen sind. Hieraus resultieren Polyurethanharnstoffe, die im Vergleich zu in homogener Lösung hergestellten Produkten geringere mechanische Festigkeit und teilweise verschlechterte Hydrolysebeständigkeit aufweisen.

Darüberhinaus ist es praktisch nicht möglich, nach dem genannten Verfahren hochkonzentrierte Dispersionen mit einem Festkörpergehalt von mehr als 40% herzustellen, da bei höheren Feststoffkonzentrationen die einzelnen dispergierten Teilchen durch das im wesentlichen zwischen den Teilchen befindliche Kettenverlängerungsmittel zu größeren Aggregaten verknüpft werden. Das führt zu sehr hohen, für die Verarbeitung ungeeigneten Viskositäten und sogar zu Verpastungen der wäßrigen Dispersionen. Ein weiterer Nachteil des beschriebenen Verfahrens ist, daß sich in Wasser unlösliche oder schwer lösliche Polyamine als Kettenverlängerer nicht verwenden lassen. Gerade mit solchen Polyaminen wie z.B. mit Diamino-dicyclohexylmethan lassen sich jedoch Polyurethanharnstoffe mit vorzüglichen mechanischen Eigenschaften herstellen.

Aufgabe der vorliegenden Erfindung war es deshalb, ein lösungsmittelfreies bzw. lösungsmittelarmes Verfahren zur Verfügung zu stellen, das die Herstellung von Polyurethanen in wäßriger Phase mit verbesserten Eigenschaften erlaubt, wobei die Verbesserung besonders dadurch erreicht werden sollte, daß der im flüssigen wäßrigen Medium verteilte hochmolekulare Festkörper durch Polyaddition in möglichst homogener Phase erhalten werden sollte.

Überraschend wurde nun gefunden, daß sich qualitativ besonders hochwertige Polyurethane in wäßriger Dispersion oder Lösung dadurch herstellen lassen, daß man NCO-endständige Präpolymere, die einen hydrophil machenden Rest oder/und einen externen Emulgator enthalten, vor der Dispergierung in Wasser mit einem Polyamin-Kettenverlängerungsmittel in zumindest teilweise blockierter Form vermischt und anschließend in Wasser dispergiert.

Die Umsetzung von organischen Polyisocyanaten, insbesondere NCO-Präpolymeren mit blockierten Polyaminen, insbesondere Polyaldiminen oder Polyketiminen und Wasser ist aus der GB—PS 1 064 841 bereits bekannt. Gemäß der Lehre dieser Vorveröffentlichung bedient man sich dieser Umsetzung jedoch ausschließlich zur Lösung eines von der Aufgabe der vorliegenden Erfindung völlig verschiedenen Problems. Das der Vorveröffentlichung zugrundeliegende Problem bestand nämlich darin, ein in Abwesenheit von Wasser lagerstabiles Gemisch herzustellen, welches bei Zusatz von Wasser, insbesondere Luftfeuchtigkeit, zu einem beliebigen Zeitpunkt zu einem hochmolekularen Kunststoff ausreagiert werden kann. Die Lösung dieser Aufgabe bestand gemäß der Lehre dieser Vorveröffentlichung darin, Gemische aus einem NCO-Präpolymeren und einem blockierten Kettenverlängerungsmittel (Polyaldimin oder Polyketimin) als solche in Abwesenheit von Wasser lagerstabile Gemischezu verwenden. Irgendwelche Anregungen, wie die bekannten Verfahren des Standes der Technik zur Herstellung von wäßrigen Polyurethandispersionen verbessert werden könnten, sind der dergenannten Vorveröffentlichung nicht zu entnehmen, da das Wasser ausschließlich in solchen Mengen eingesetzt wird, die zur Freisetzung des Kettenverlängerungsmittels benötigt werden, und da auch an keiner Stelle der Einsatz von Emulgatoren oder von hydrophilen NCO-Präpolymeren, wie sie zur Herstellung von wäßrigen Polyurethandispersionen im allgemeinen eingesetzt werden, erwähnt wird.

Gegenstand der vorliegenden Erfindung ist daher ein Verfahren zur Herstellung von wäßrigen Lösungen oder Dispersionen von Polyurethan-Polyharnstoffen durch Umsetzung von chemisch eingebaute hydrophile Gruppierungen und/oder externe, nicht chemisch gebundene Emulgatoren enthaltenden, mindestens 2 freie Isocyanatgruppen aufweisenden Präpolymeren mit mindestens 2 primäre und/oder sekundäre Aminogruppen aufweisenden organischen Verbindungen in wäßriger Phase, dadurch gekennzeichnet, daß man das hydrophil modifizierte und/oder einen externen Emulgator enthaltende Isocyanatgruppen aufweisende Präpolymer in Abwesenheit von Wasser mit Verbindungen vermischt, welche höchstens eine freie primäre oder sekundäre Aminogruppe und mindestens eine blockierte, unter dem Einfluß von Wasser eine freie primäre oder sekundäre Aminogruppe bildende Gruppe und insgesamt mindestens zwei zumindest teilweise blockierte primäre und/oder sekundäre Aminogruppen aufweisen, und man anschließend dieses Gemisch mit Wasser vermischt.

Gegenstand der vorliegenden Erfindung ist schließlich auch die Verwendung der nach diesem Verfahren hergestellten Dispersionen oder Lösungen zur Beschichtung von flexiblen Substraten.

Ausgangsmaterialien für das erfindungsgemäße Verfahren sind mindestens 2 endständige Isocyanatgruppen aufweisende NCO-Präpolymere. Vorzugsweise werden difunktionelle NCO-Präpolymere eingesetzt. Vorzugsweise handelt es sich bei den beim erfindungsgemäßen Verfahren einzusetzenden NCO-Präpolymeren um solche, welche eine oder mehrere ihre Löslichkeit bzw. Dispergierbarkeit in Wasser bedingende hydrophile Gruppierung(en) aufweisen. Es ist jedoch auch möglich, beim erfindungsgemäßen Verfahren an sich hydrophobe NCO-Präpolymere einzusetzen, falls für ihre Löslichkeit bzw. Dispergierbarkeit in

Wasser durch Mitverwendung von externen Emulgatoren Sorge getragen wird. Selbstverständlich ist es auch denkbar, die Hydrophilie von eingebaute hydrophile Gruppen enthaltenden NCO-Präpolymeren durch zusätzliche Mitverwendung von externen Emulgatoren zu erhöhen.

Aus diesen Darlegungen geht bereits hervor, daß der genaue chemische Aufbau der NCO-Präpolymeren beim erfindungsgemäßen Verfahren nicht kritisch ist. Dies bedeutet insbesondere daß zur Durchführung des erfindungsgemäßen Verfahrens alle NCO-Präpolymeren geeignet sind, die bislang bereits bei der Herstellung von wäßrigen Polyurethan-Dispersionen oder-lösungen zum Einsatz gelangten. Ihre Herstellung erfolgt nach bekannten Verfahren des Standes der Technik und ist beispielsweise in den DT—OSen 1 495 745, 1 495 847, 2 446 440 2 340 512, der US—PS 3 479 310, den GB—PSen 1 153 088 oder 1 076 688 beschrieben.

Die Herstellung der beim erfindungsgemäßen Verfahren bevorzugt einzusetzenden NCO-Präpolymeren mit chemisch eingebauten hydrophilen Gruppen geschieht in Analogie zu den Methoden, wie sie in den beispielhaft genannten Literaturstellen genannt sind. Ausgangsmaterialien zur Herstellung dieser NCO-Präpolymeren sind demzufolge

1. beliebige organische Polyisocyanate, vorzugsweise Diisocyanate der Formel

$$Q\ (NCO)_2$$

wobei Q für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Hexamethylendiisocyanat, Isophorondiisocyanat, 4,4'-Diisocyanatodicyclohexylmethan, 2,4-Diisocyanatotoluol, 2,6-Diisocyanatotoluol, 4,4'-Diisocyanatodiphenylmethan, p-Xylylen-diisocyanat sowie aus diesen Verbindungen bestehende Gemische.

Es ist selbstverständlich auch möglich, beim erfindungsgemäßen Verfahren die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)-zuverwenden.

2. Beliebige organische Verbindungen mit mindestens zwei gegenüber Isocyanatgruppen reaktionsfähigen Gruppen, insbesondere insgesamt zwei Aminogruppen, Thiolgruppen, Carboxylgruppen und/oder Hydroxylgruppen aufweisende organische Verbindungen des Molekulargewichtsbereichs 62—10.000, vorzugsweise 1.000 bis 6.000. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyäther, Hydroxypolythioäther, Hydroxypolyacetale, Hydroxypolycarbonate und/oder Hydroxypolyesteramide. Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein.

Als Beispiele hierfür seien genannt: Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, Als mehrwertige Alkohole kommen z.B. Äthylenglykol, Propylenglykol-(1,2) und -(1,3), Butylenglykol-(1,4) und -(2,3), Hexandiol-(1,6), Bis-hydroxymethylcyclohexan), 2-Methyl-1,3-propandiol, Glycerin, Trimethylolpropan, Hexantriol-(1,2,6), ferner Polyäthylenglykole, Polypropylenglykole, und Polybutylenglykole in Frage. Die Polyester können anteilig endständige Carboxylgruppen aufweisen. Auch Polyester aus Lactonen, z.B. $\varepsilon$-Caprolacton oder Hydroxycarbonsäuren, z.B. $\omega$-Hydroxycapronsäure, sind einsetzbar.

Auch die erfindungsgemäß in Frage kommenden, vorzugsweise zwei Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Alkohole und Amine, z.B. Wasser, Äthylenglykol, Propylenglykol-(1,3) oder -(1,2), 4,4'-Dihydroxy-diphenylpropan, Anilin, hergestellt.

Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695,

deutsche Patentschrift 1 152 536), sind ebenfalls geeignet. Die anteilig gegebenenfalls mitzuverwendenden höherfunktionellen Polyäther entstehen in analoger Weise durch an sich bekannte Alkoxylierung von höherfunktionellen Startermolekülen z.B. Ammoniak Äthanolamin, Äthylendiamin oder Sukrose.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt.

Als Polyacetale kommen z.B. die aus Glykolen, wie Diäthylenglykol, und Formaldehyd herstellbaren Verbindungen in Frage.

Als Hydroxylgruppen aufweisende Polycarbonate kommen solche der an sich bekannten Art in Betracht.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Auch niedermolekulare Polyole können (mit)verwendet werden, wie z.B. Äthandiol, Propandiol-1,2 und -1,3, Butandiol-1,4 und -1,3, Pentandiole, Hexandiole, Trimethylolpropan, Hexantriole, Glycerin und Pentaerythrit.

Vertreter der genannten im erfindungsgemäßen Verfahren zu verwendenden Polyisocyanat- und Hydroxyl-Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45 bis 71, beschrieben.

3. Chemisch fixierte hydrophile Gruppen aufweisende, vorzugsweise im Sinne der Isocyanat-Additionsreaktion mono- und insbesondere difunktionelle Aufbaukomponenten der beispielhaft in den obengenannten Literaturstellen bezüglich der Herstellung von wäßrigen Polyurethandispersionen oder -lösungen beschriebenen Art, d.h. beispielsweise ionische bzw. potentielle ionische Gruppen aufweisende Diisocyanate, Diamine oder Dihydroxyverbindungen bzw. Polyäthylenoxid-Einheiten aufweisende Diisocyanate oder Glykole. Zu den bevorzugten hydrophil modifizierten Aufbaukomponenten gehören insbesondere die Sulfonatgruppen aufweisenden aliphatischen Diole gemäß DT—OS 2 446 440, die kationischen oder auch anionischen einbaufähigen inneren Emulgatoren gemäß deutscher Patentanmeldung P 26 51 506.0 und auch die in dieser Patentanmeldung beschriebenen, monofunktionellen einbaufähigen Polyäther. Bei der Herstellung der NCO-Präpolymeren nach an sich bekannten Prinzipien des Standes der Technik werden die Reaktionspartner im allgemeinen in solchen Mengenverhältnissen eingesetzt, die einem Verhältnis von Isocyanatgruppen zu gegenüber NCO-reaktiven Wasserstoffatomen, vorzugsweise aus Hydroxylgruppen, von 1,05 bis 10, vorzugsweise von 1,1 bis 3 entsprechen.

Die Reihenfolge der Zugabe der einzelnen Reaktionspartner ist hierbei weitgehend beliebig. Man kann sowohl die Hydroxylverbindungen abmischen und dazu das Polyisocyanat zufügen oder auch zur Polyisocyanatkomponente das Gemisch der Hydroxylverbindungen oder die einzelnen Hydroxylverbindungen nach und nach eintragen.

Die Herstellung der NCO-Präpolymere erfolgt vorzugsweise in der Schmelze bei 30—190°C, vorzugsweise bei 50—120°C. Die Herstellung der Präpolymere könnte selbstverständlich auch in Gegenwart von organischen Lösungsmitteln erfolgen, obwohl einer der Hauptvorteile des erfindungsgemäßen Verfahrens gerade in dem möglichen Verzicht auf derartige Lösungsmittel zu sehen ist. Geeignete Lösungsmittel, die z.B. in einer Menge bis zu 25 Gew.-%, bezogen auf den Feststoff eingesetzt werden können, wären z.B. Aceton, Methyläthylketon, Essigsäureäthylester, Dimethylformamid oder Cyclohexanon.

Die Art und Mengenverhältnisse der bei der Herstellung der NCO-Präpolymeren eingesetzten Ausgangsmaterialien werden im übrigen vorzugsweise so gewählt, daß die NCO-Präpolymeren

a) eine mittlere NCO-Funktionalität von 1,8 bis 2,2, vorzugsweise 2,

b) einen Gehalt an kationischen oder anionischen eingebauten Gruppen von 0 bis 100, vorzugsweise 0,1 bis 100 und insbesondere 0,5 bis 50 Milli-Äquivalent pro 100 g Feststoff,

c) einen Gehalt an seitenständig, endständig und/oder innerhalb der Hauptkette eingebauten, inner halb eines Polyäthersegments vorliegenden Äthylenoxid-Einheiten von 0 bis 30, vorzugsweise 0,5 bis 30 und insbesondere 1 bis 20 Gew.-%, bezogen auf das Gesamtgewicht des Präpolymeren und

d) ein mittleres Molekulargewicht von 500 bis 10.000, vorzugsweise 800 bis 4.000 aufweisen.

Zu den bevorzugten NCO-Präpolymeren gehören, wie bereits dargelegt, solche, welche entweder ionische Gruppen der unter b) genannten Art, d.h. insbesondere $—COO^-$, $—SO_3^-$ oder $=N^+=$, oder nichtionische Gruppen der unter c) genannten Art oder sowohl ionische als auch nichtionische Gruppen der genannten Art aufweisen. Es ist jedoch auch möglich, beim erfindungsgemäßen Verfahren NCO-Präpolymere einzusetzen, bei deren herstellung keine der unter 3. genannten hydrophilen Aufbaukomponenten mitverwendet wurden, bei denen der Gehalt der oben unter b) bzw. c) genannten

Gruppen somit 0 beträgt. Im Falle der Verwendung derartiger NCO-Präpolymerer, die im übrigen auch die oben unter a) und d) genannten Eigenschaften aufweisen, ist bei der Durchführung des erfindungsgemäßen Verfahrens die Mitverwendung von externen Emulgatoren unerläßlich. Geeignete derartige Emulgatoren sind beispielsweise von R. Heusch in "Emulsionen", Ullmann, Band 10, Seiten 449—473, Weinheim 1975, beschrieben. Geeignet sind sowohl ionische Emulgatoren wie z.B. Alkali- und Ammoniumsalze von langkettigen Fettsäuren oder langkettigen Aryl-(Alkyl)sulfonsäuren, als auch nicht-ionische Emulgatoren wie z.B. äthoxylierte Alkylbenzole mit einem mittleren Molgewicht von 500 bis 10.000.

Diese externen Emulgatoren werden vor der Durchführung des erfindungsgemäßen Verfahrens mit den NCO-Präpolymeren innig durchmischt. Sie gelangen im allgemeinen in Mengen von 1 bis 30, vorzugsweise 5 bis 20 Gew-%, bezogen auf das Gewicht des NCO-Präpolymeren zum Einsatz. Es ist durchaus möglich, auch bei Verwendung von hydrophil modifizierten NCO-Präpolymeren deren Hydrophilie durch zusätzliche Mitverwendung derartiger externer Emulgatoren zu erhöhen, obwohl dies im allgemeinen nicht erforderlich ist.

Neben den NCO-Präpolymeren werden bei erfindungsgemäßen Verfahren mindestens 2 primäre und/oder sekundäre Aminogruppen aufweisende organische Verbindungen eingesetzt. Vorzugsweise handelt es sich bei diesen Verbindungen um aliphatische oder cycloaliphatische Diamine mit ausschließlich primären und/oder sekundären Aminogruppen. Die Bezeichnung "aliphatisches bzw. cycloaliphatisches Diamin" bezieht sich hierbei ausschließlich auf die Natur der mit den Aminogruppen verknüpften Kohlenstoffatome. So sind im Rahmen der vorliegenden Erfindung auch araliphatische Diamine als aliphatische Diamine anzusehen. Besonders bevorzugt werden diprimäre Diamine eingesetzt, wobei ganz besonders solche diprimären Diamine bevorzugt sind, die in ihrem Molekül mindestens einen cycloaliphatischen Ring mit insbesondere 6 Ring-Kohlenstoffatomen aufweisen, wobei es unerheblich ist, ob die Aminogruppen direkt mit diesem cycloaliphatischen Ring oder mit einem Alkyl-Substituenten, insbesondere Methyl-Substituenten dieses aliphatischen Rings verknüpft sind. Die beim erfindungsgemäßen Verfahren einzusetzenden Diamine weisen im allgemeinen ein Molekulargewicht von 60—500, vorzugsweise 100—250 auf. Beispiele geeigneter beim erfindungsgemäßen Verfahren einzusetzender Polyamine sind Äthylendiamin, Trimethylendiamin, Tetramethylendiamin, Hexamethylendiamin, Propylendiamin-1,2, das Isomerengemisch von 2,2,4- und 2,4,4-Trimethylhexamethylendiamin, 1,3- und 1,4-Xylylendiamin, Bis-(2-aminoäthyl)-amin und Methyl-bis-(3-amino-propyl)-amin.

Zu den bevorzugten Diaminen gehören beispielsweise:

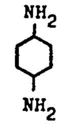
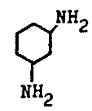
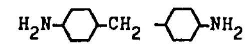

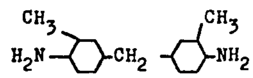
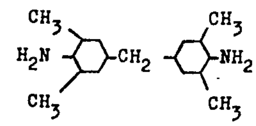

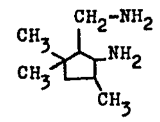
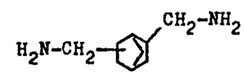

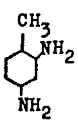
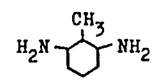
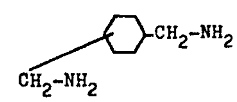

Besonders bevorzugt ist:

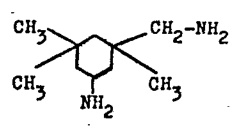
(Isophorondiamin)

Wesentliches Kennzeichen des erfindungsgemäßen Verfahrens ist nun, daß die beispielhaft genannten Polyamine nicht als solche, sondern in Form von zumindest teilweise blokkierten Aminen zum Einsatz gelangen. Unter "blockierten Aminogruppen" sind im Rahmen der vorliegenden Erfindung insbesondere solche primären bzw. sekundären Aminogruppen zu verstehen, die durch Reaktion mit einem Aldehyd oder Keton in die entsprechenden Ketimin-, Aldimin- oder Enamin-Gruppe überführt woren sind. Derartige Ketimin-, Aldimin- oder Enamin-Gruppen sind bei Raumtemperatur in Abwesenheit von Feuchtigkeit gegenüber Isocyanatgruppen weitgehend inert (vgl. hierzu beispielsweise DT—US 2 125 247, US—PS 3 420 800, US—PS 3 567 692 bzw. DT—OS 1 520 139) und reagieren erst bei Zutritt von Wasser unter Freisetzung der entsprechenden Aminogruppe mit Isocyanatgruppen. Vorzugsweise werden beimerfindungsgemäßen Verfahren aus den beispielhaft genannten, bevorzugt einzusetzenden Polyaminen mit primären Aminogruppen erhaltene Aldimin- oder Ketimin-Gruppen aufweisende, zumindest teilweise blockierte Polyamine eingesetzt. Es ist bei der Durchführung des erfindungsgemäßen Verfahrens allerdings nicht notwendig, daß alle Aminogruppen mit einem Keton bzw. Aldehyd umgesetzt und damit blokkiert werden. Wesentlich ist allein, daß mindestens 50%, vorzugsweise mehr als 85% der in der Amin-Komponente vorliegenden Aminogruppen in blockierter Form vorliegen, und daß die beim erfindungsgemäßen Verfahren einzusetzenden Amine im statistischen Mittel maximal 1 Mol freie Aminogruppen vorzugsweise maximal 0,15 Mol freie Aminogruppen pro Mol Polyamin aufweisen. So ist es im Fall der zwar nicht bevorzugten, jedoch denkbaren Verwendung eines Triamins mit insgesamt 3 primären und/oder sekundären Aminogruppen erforderlich, jedoch auch ausreichend, wenn 2 der insgesamt 3 Aminogruppen in blockierter Form vorliegen. Im Falle der bevorzugten Verwendung der beispielhaft genannten Diamine ist es entsprechend den gemachten Ausführungen erforderlich, im Extremfall jedoch bereits ausreichend, wenn eine der beiden Aminogruppen in blockierter Form vorliegt. Die Herstellung der Ketimin-, Aldimin- bzw. Enamingruppen aufweisenden, zumindest teilweise blockierten Polyamine gehört zum bekannten Stand der Technik und ist beispielsweise in Houben-Weyl, Methoden der Organischen Chemie, Band XI/2, Seiten 73 ff. oder in DT—OS 2 125 247 beschrieben. Da die Aminogruppen der erfindungsgemäß einzusetzenden Amin-Komponente nicht quantitativ blockiert sein müssen, erübrigt sich auch eine quantitative Durchführung der Kondensationsreaktion bei der Herstellung der teilweise blockierten Polyamine.

Zur Herstellung der erfindungsgemäß einzusetzenden, zumindest teilweise blockierten Polyamine geeignete Aldehyde bzw. Ketone sind beliebige mindestens eine Keton- bzw. Aldehyd-Gruppe aufweisende, ansonsten unter den Reaktionsbedingungen inerte organische Verbindungen. Vorzugsweise werden jedoch aliphatische oder cycloaliphatische Aldehyde oder Ketóne mit insgesamt 2 bis 18, bzw. im Falle der cycloaliphatischen Verbindungen 5 bis 18, vorzugsweise 3 bis 6, bzw. im Falle der cycloaliphatischen Verbindungen 5 bis 6 Kohlenstoffatomen eingesetzt. Beispiele geeigneter Aldehyde bzw. Ketone sind Acetaldehyd, Propionaldehyd, Butyraldehyd, Isobutyraldehyd, Aceton, Methyläthylketon, Methylisobutylketon, Diisopropylketon, Cyclohexanon oder Cyclopentanon. Aromatische Aldehyde bzw. Ketone wie z.B. Benzaldehyd, Acetophenon oder Benzophenon sind ebenfalls geeignet, jedoch weniger bevorzugt.

Zur Durchführung des erfindungsgemäßen Verfahrens werden die gegebenenfalls externen Emulgator enthaltenden NCO-Präpolymeren mit den genannten zumindest teilweise blockierten Polyaminen vermischt. Das Mengenverhältnis zwischen NCO-Präpolymer und zumindest teilweise blockiertem Polyamin wird hierbei im allgemeinen so gewählt, daß das Äquivalent-Verhältnis (NCO-Gruppen des Präpolymeren): (freie + blockierte Aminogruppen der Amin-Komponente) zwischen 4:1 und 1:1,5, vorzugsweise zwischen 2:1 und 1:1,25 und insbesondere zwischen 1,2:1 und 1:1,2 liegt. Die Abmischung der beiden Komponenten erfolgt in einem Temperaturbereich von —20 bis 100°C, vorzugsweise von 20 bis 60°C. Da beim erfindungsgemäßen Verfahren nicht alle Aminogruppen blockiert sein müssen, tritt beim Vermischen der beiden Komponenten unter Umständen zwischen NCO-Gruppen und nicht verkappten Aminogruppen eine Reaktion ein, die zu einer geringfügigen Viskositätserhöhung führen kann. Es ist oft vorteilhaft, das NCO-Propolymere erst kurz vor der Dispergierung in Wasser mit dem verkappten Polyamin abzumischen.

Der nachfolgende Schritt des erfindungsgemäßen Verfahrens besteht in dem Vermischen des Gemisches mit Wasser zur Herstellung der wäßrigen Dispersion unter gleichzeitiger Hydrolyse des verkappten Polyamins. Man benutzt für diesen Schritt so viel Wasser, daß die Dispersion einen möglichst hohen Festkörperanteil aufweist. Vorzugsweise lassen sich Dispersionen mit 40 bis 70% Festkörper sehr gut herstellen. Weiteres Verdünnen mit Wasser ist ohne weiteres möglich. Das Wasser wird vorzugsweise in einem Guß oder je nach Belieben nach und nach zugegeben. Die Vermischung des Gemisches aus Präpolymer mit verkapptem Polyamin mit Wasser kann aber auch so erfolgen, daß das Gemisch in die wäßrige Phase eingetragen wird oder daß nach einem kontinuierlichen Verfahren in geeigneten Mischaggregaten zunächst Präpolymer und verkapptes Polyamin und dann Wasser miteinander vermischt werden. Man benutzt Wasser von 0 bis 90°C, vorzugsweise von 20 bis 60°C.

Die entstehenden Dispersionen sind sehr feinteilig, die Teilchen haben vorzugsweise eine Größe von 20—200 nm, können natürlich auch größer sein.

In einem letzten Schritt können die nach dem erfindungsgemäßen Verfahren hergestellten Dispersionen selbstverständlich noch weiter in bekannter Weise modifiziert werden. Man kann z.B. nach der Dispergierung noch ein weiteres in Wasser lösliches Polyamin wie zum Beispiel Hydrazin zufügen, falls das Äquivalent-Verhältnis von NCO zu (verkappten) Aminogruppen so gewählt wurde, daß noch freie NCO-Gruppen vorhanden sind.

Wurde das Äquivalent-Verhältnis von NCO-Gruppen zu (verkappten) Aminogruppen in dem Bereich von 1:1 bis 1:1,5 gewählt, so ist ebenfalls in der wäßrigen Phase eine nachträgliche Modifizierung des mit endständigen Aminogruppen versehenen Polyurethans möglich. Als Modifizierungsmittel kommen z.B. Mono- und Polyisocyanate, die auch in verkappter Form vorliegen können und Epoxid-Gruppen enthaltende chemische Verbindungen infrage. Durch die nachträgliche Modifizierung der wäßrigen Polyurethanharnstoffe können erwünschte Eigenschaften erzielt werden, wie z.B. eine Hydrophobierung durch die Umsetzung mit Stearylisocyanat.

Die Frage, ob beim erfindungsgemäßen Verfahren Lösungen oder Dispersionen der Polyurethane in Wasser erhalten werden, ist vor allem vom Molekulargewicht und der Hydrophilie der gelösten bzw. dispergierten Teilchen abhängig, welche ihrerseits durch geeignete Wahl von Art und Mengenverhältnis der Ausgangsmaterialien, insbesondere bei der Herstellung der NCO-Präpolymeren nach den bekannten Prinzipien der Polyurethan-Chemie eingestellt werden können. So führt beispielsweise die Verwendung von einem NCO-Präpolymeren mit einer geringfügig unter 2 liegenden mittleren NCO-Funktionalität zu einem Abbruch der Polyadditionsreaktion, bevor allzu hohe Molekulargewichte erreicht sind. Die nach dem erfindungsgemäßen Verfahren hergestellten, in wäßriger Dispersion bzw. Lösung vorliegenden Polyurethane sind den bekannten in organischen Lösungsmitteln hergestellten Polyurethanen ebenbürtig. Aus ihnen hergestellte Filme weisen eine ausgezeichnete mechanische Festigkeit und Hydrolysebeständigkeit auf und können für die verschiedensten Einsatzgebiete verwendet werden.

Ein besonders bevorzugtes Einsatzgebiet der erfindungsgemäßen Dispersionen bzw. Lösungen ist die Beschichtung von flexiblen Substraten. Die Dispersionen sind insbesondere auch für die Textilausrüstung, für Glasfaserschlichten oder aber auch als Klebstoffe geeignet.

Beispiel 1

Ansatz:

1237,5 g Adipinsäure - Butandiol - Polyester (Molekulargewicht: 2250)
191,3 g propoxyliertes Addukt aus 2-Butendiol-1,4 und $NaHSO_3$ (Molekulargewicht: 425)
488,4 g Isophorondiisocyanat
300,6 g Ketimin aus Isophorondiamin und Methyl-isobutylketon (Aminogruppen zu 98% blockiert)
3000 g entionisiertes Wasser

Durchführung:

Zu dem bei 120°C im Vakuum entwässerten Gemisch aus Polyester und Bisulfit-Addukt gibt man bei 70°C das Isophorondiisocyanat und rührt bei 100°C, bis ein NCO-Wert von 5,3% erreicht ist. Dann kühlt man das Präpolymer auf 60°C ab, gibt das Bis-Ketimin zu und läßt in das gut gerührte Gemisch das Wasser einlaufen.

Es entsteht eine Dispersion mit einem Feststoffgehalt von 40% und einer Fordbecherviskosität (4 mm-Düse) von 14 Sekunden. Die Dispersion zeigt im durchscheinenden Licht einen Tyndall-Effekt.

Die Dispersion trocknet zu klaren, elastischen Filmen und ist zur Textilbeschichtung geeignet.

Beispiel 2

Es wird ein Präpolymer gemäß Beispiel 1 hergestellt. Nach Abkühlen auf 60°C rührt man 250,2 g eines Ketimins aus Isophorondiamin und Methyl-äthylketon (Aminogruppen zu 87% blockiert) ein und dispergiert dann wie in Beispiel 1 beschrieben. Die entstandene Dispersion ist dünnflüssig und zeigt einen Tyndall-Effekt.

Beispiel 3

Es wird ein Präpolymer gemäß Beispiel 1 hergestellt. Nach Abkühlen auf 60°C rührt man 225 g eines Ketimins aus Isophorondiamin und Aceton (Aminogruppen zu 80% blockiert) ein und dispergiert dann wie in Beispiel 1 beschrieben. Die enstandene Dispersion ist dünnflüssig und zeigt einen Tyndall-Effekt.

Beispiel 4

Es wird ein Präpolymer gemäß Beispiel 1 hergestellt. Nach Abkühlen auf 60°C rührt man 250,2 g eines Aldimins aus Isophorondiamin und Isobutyraldehyd (Aminogruppen zu 99% blockiert) ein und dispergiert dann wie in Beispiel 1 beschrieben. Die entstandene Dispersion ist dünnflüssig und zeigt einen Tyndall-Effekt.

Beispiel 5

Es wird ein Präpolymer gemäß Beispiel 1 hergestellt. Nach Abkühlen auf 60°C rührt man 297 g eines Ketimins aus Isophorondiamin und Cyclohexanon (Aminogruppen zu 99% blokkiert) ein und dispergiert dann wie in Beispiel 1 beschrieben. Die entstandene Dispersion ist dünnflüssig und zeigt einen Tyndall-Effekt.

Beispiel 6

Es wird ein Präpolymer gemäß Beispiel 1 hergestellt. Nach Abkühlen auf 50°C gibt man 25,3 g eines Kondensationsproduktes aus Diäthylentriamin und Methyläthylketon der Formel

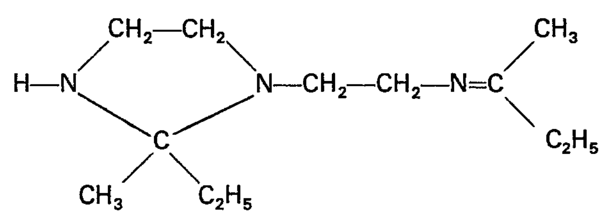

zu, worauf ein Temperaturanstieg um 10°C erfolgt. Die eingesetzte Menge an freien NH-Gruppen entspricht einem Umsatz von 5% der verfügbaren NCO-Gruppen. Anschließend werden 200,1 g eines Ketimins aus Isophorondiamin (Aminobruppen zu 90% blockiert) und Methyläthylketon eingerührt und man dispergiert wie in Beispiel 1 beschrieben. Die entstandene Dispersion ist dünnflüssig und zeigt einen Tyndall-Effect.

Beispiel 7

Ansatz:

600 g Phthalsäure - Äthandiol - Polyester (Molekulargewicht: 2000)
525 g Phthalsäure-Adipinsäure - Äthandiol - Polyester (Molekulargewicht: 1750)
170 g propoxyliertes Addukt aus 2-Butendiol-1,4 und $NaHSO_3$ (MG: 425)
285,6 g Hexamethylen(1,6)-diisocyanat
112 g Bis-Ketimin aus Hexamethylen-(1,6)-diamin und Methyl-isobutylketon (Aminogruppen zu 100% blockiert)
3700 g entionisiertes Wasser

Durchführung:

Zu dem bei 120°C im Vakuum entwässerten Gemisch aus den beiden Polyestern und dem Bisulfit-Addukt gibt man bei 70°C das Hexamethylen-(1,6)-diisocyanat und rührt bei 100°C, bis ein NCO-Wert von 4,1% erreicht ist. Dann kühlt man das Präpolymer auf 80°C ab, gibt das Bis-Ketimin zu und läßt in das gut gerührte Gemisch das Wasser einlaufen.

Es entsteht eine Dispersion mit einem Feststoffgehalt von 30% und der Fordbecherviskosität (4 mm Düse) von 15 Sekunden. Die Dispersion zeigt im durchscheinenden Licht einen Tyndall-Effekt. Die Dispersion trocknet zu klaren, farblosen, elastischen Filmen. Sie ist zur Beschichtung von Papier und Leder geeignet.

Beispiel 8

Ansatz:

300 g Phthalsäure - Äthandiol - Polyester (MG: 2000)
612,5 g Phthalsäure - Adipinsäure - Äthandiol - Polyester (MG: 1750)
13,4 g Trimethylolpropan
148,8 g propoxyliertes Addukt aus 2-Butendiol-1,4 und $NaHSO_3$ (MG: 425)
285,6 g Hexamethylen(1,6) - diisocyanat
78,4 g Ketimin aus Hexamethylene (1,6)-diamin und Aceton (Aminogruppen zu 95% blockiert)
3300 g entionisiertes Wasser

Durchführung:

Zu dem bei 120°C im Vakuum entwässerten Gemisch aus den beiden Polyestern, dem Trimethylolpropan und dem Bisulfit-Addukt gibt man bei 70°C das Hexamethylen(1,6)-diisocyanat und rührt bei 100°C, bis ein NCO-Wert von 4,3% erreicht ist. Dann kühlt man das Präpolymer auf 80°C ab, gibt das Bis-Ketimin zu und läßt in das gut gerührte Gemisch das Wasser einlaufen.

Es entsteht eine Dispersion mit einem Feststoffgehalt von 30% und einer Fordbecherviskosität (4 mm Düse) von 15 Sekunden. Die Dispersion zeigt im durchscheinenden Licht einen Tyndall-Effekt. Die Dispersion ist als Binder in der Lederzurichtung geeignet. Sie trocknet zu klaren, farblosen, elastischen Filmen.

Beispiel 9

Ansatz:

600 g Phthalsäure - Äthandiol - Polyester (MG: 2000)
700 g Phthalsäure - Adipinsäure - Äthandiol - Polyester (MG: 1750)
127,8 g propoxyliertes Addukt aus 2-Butendiol-1,4 und $NaHSO_3$ (MG: 425)
285,6 g Hexamethylen(1,6)-diisocyanat
149,6 g Ketimin aus 4,4' - Diaminodicyclohexylmethan und Methylisobutylketon (Aminogruppen zu 98% blokkiert)
4100 g entionisiertes Wasser

Durchführung:

Zu dem bei 120°C im Vakuum entwässerten Gemisch aus den beiden Polyestern und dem Bisulfit-Addukt gibt man bei 70°C das Hexamethylen(1,6)-diisocyanat und rührt bei 100°C, bis ein NCO-Wert von 3,4% erreicht ist. Man kühlt das Präpolymer auf 80°C ab, gibt das Bis-Ketimin zu und läßt dann in das gut gerührte Gemisch Wasser einlaufen.

Es entsteht eine Dispersion mit einem Feststoffgehalt von 30% und einer Fordbecherviskosität (4 mm Düse) von 13 Sekunden. Die Dispersion zeigt im durchscheinenden Licht einen Tydall-Effekt.

Beispiel 10

Ansatz:

1000 g Polyester aus Adipinsäure, Äthylenglykol, Butandiol-1,4 und Diäthylenglykol (MG: 2000)
1100 g Addukt aus äquivalenten Teilen
 (i) eines Polyäthers aus 83% Äthylenoxid und 17% Propylenoxid, gestartet auf n-Butanol,
 (ii) Hexamethylen(1,6) - diisocyanat und
 (iii) Diäthanolamin (MG: 2200)
369,2 g Hexamethylen(1,6)-diisocyanat
250,2 g Ketimin aus Isophorondiamin und Methyl-äthyl-keton (Aminogruppen zu 90% blockiert)
6000 g entionisiertes Wasser

Durchführung:

Zu dem bei 120°C im Vakuum entwässerten Gemisch aus dem Polyester und dem Polyätherdiol gibt man bei 70°C das Hexamethylen(1,6)-diisocyanat und rührt bei 100°C, bis ein NCO-Wert von 4,1% erreicht ist. Dann kühlt man das Präpolymer auf 40°C ab, gibt das Bis-Ketimin zu und läßt in das gut gerührte Gemisch Wasser einlaufen.

Es entsteht eine Dispersion mit einem Feststoffgehalt von 30% und einer Fordbecherviskosität (4 mm Düse) von 17 Sekunden. Die Dispersion zeigt im durchscheinenden Licht einen starken Tyndall-Effekt.

Durchführung:

Zu dem bei 120°C im Vakuum entwässerten Gemisch aus Polyester, Polyäther und Bisulfitaddukt gibt man bei 70°C das Isophorondiisocyanat und rührt bei 100°C, bis ein NCO-Wert von 4,0% erreicht ist. Dann kühlt man das Präpolymer auf 60°C ab, gibt das Bis-Ketimin zu und läßt in das gut gerührte Gemisch Wasser einlaufen.

Es entsteht eine Dispersion mit einem Feststoffgehalt von 60% und einer Fordbecherviskosität (4 mm Düse) von 85 Sekunden. Die Dispersion zeigt im durchscheinenden Licht einen Tyndall-Effekt. Die Dispersion ist für die Textilbeschichtung geeignet. Sie trocknet zu klaren, farblosen, elastischen Filmen mit folgenden Eigenschaften:

Zugfestigkeit: 494 kp/cm²

Bruchdehnung: 580%

Beispiel 11

Ansatz:

| | | |
|---|---|---|
| 1867,5 | g | Adipinsäure - Butandiol - Polyester (MG: 2250) |
| 85,8 | g | Polyäther aus 15% Propylenoxid und 85% Äthylenoxid, gestartet auf n-Butanol (MG: 2145) |
| 63,9 | g | propoxyliertes Addukt aus 2-Butendiol-1,4 und $NaHSO_3$ (MG: 425) |
| 488,4 | g | Isophorondiisocyanat |
| 300,6 | g | Ketimin aus Isophorondiamin und Methyl-isobutylketon (Aminogruppen zu 98% blockiert) |
| 1780 | g | entionisiertes Wasser |

Beispiel 12

Ansatz:

| | | |
|---|---|---|
| 1125 | g | Adipinsäure - Butandiol - Polyester (MG: 2250) |
| 181,5 | g | Polypropylenoxid - Polyäther, gestartet auf Bisphenol (MG: 550) |
| 85,8 | g | Polyäther aus 15% Propylenoxid und 85% Äthylenoxid, gestartet auf n-Butanol (MG: 2145) |
| 63,9 | g | propoxyliertes Addukt aus 2-Butendiol-1,4 und $NaHSO_3$ (MG: 425) |
| 133,2 | g | Isophorondiisocyanat |
| 302,4 | g | Hexamethylen(1,6)-diisocyanat |
| 222,4 | g | Ketimin aus Isophorondiamin und Methyläthylketon (Aminogruppen zu 90% blockiert) |
| 3000 | g | entionisiertes Wasser |
| 15 | g | Hydrazinhydrat |

Durchführung:

Zu dem bei 120°C im Vakuum entwässerten Gemisch aus dem Polyester, den beiden Polyäthern und dem Bisulfit-Addukt gibt man bei 70°C eine Mischung aus dem Isophorondiisocyanat und dem Hexamethylen(1,6)-diisocyanat und rührt bei 100°C, bis ein NCO-Wert von 6,2% erreicht ist. Man kühlt das Präpolymer auf 60°C ab, gibt das Bis-Ketimin zu und läßt dann in das gut gerührte Gemisch Wasser einlaufen. Nach 5 Minuten wird das Hydrazinhydrat zugegeben und 2 Stunden nachgerührt. Es entsteht eine Dispersion mit einem Feststoffgehalt von 40% und einer Fordbecherviskosität (4 mm Düse) von 13 Sekunden. Die Dispersion zeigt im durchscheinenden Licht einen Tyndall-Effekt. Die Dispersion ist für die Textilbeschichtung geeignet. Sie trocknet zu einem klaren, farblosen, elastischen Film, der sich durch Hydrolysefestigkeit und Resistenz gegenüber UV-Bestrahlung auszeichnet.

| | Anfangswert | n. 14 d Hydrolysetest | n. 400 h Xenotest |
|---|---|---|---|
| Zugfestigkeit | 534 kp/cm² | 432 kp/cm² | 430 kp/cm² |
| Bruchdehnung | 670% | 550% | 530% |

Beispiel 13

Ansatz:

| | | |
|---|---|---|
| 675 | g | Adipinsäure - Butandiol - Polyester (MG: 2250) |
| 165 | g | Polypropylenoxid - Polyäther, gestartet auf Bisphenol A (MG: 550) |
| 488,4 | g | Isophorondiisocyanat |
| 107,2 | g | Dimethylolpropionsäure |
| 70,7 | g | Triäthylamin |
| 139 | g | Ketimin aus Isophorondiamin und Methyl-äthylketon (Aminogruppen zu 90% blockiert) |
| 3600 | g | entionisiertes Wasser |

Durchführung:

Zu dem bei 120°C im Vakuum entwässerten Gemisch aus dem Polyester und dem Polyäther gibt man bei 70°C das Isophorondiisocyanat und rührt bei 100°C, bis ein NCO-Wert von 10,1% erreicht ist. Dann kühlt man wieder auf 70°C ab, rührt die Dimethylolpropionsäure ein und läßt das Präpolymer bei der gleichen Temperatur ausreagieren. Nach Erreichen des theoretischen NCO-Gehaltes von 4,7% gibt man nacheinander das Triäthylamin und das Bis-Ketimin zu und läßt in das gut gerührte Gemisch Wasser einlaufen. Es entsteht eine Dispersion

mit einem Feststoffgehalt von 30% und einer Fordbecherviskosität von 14 Sekunden. Die Dispersion zeigt im durchscheinenden Licht einen Tyndall-Effekt.

Beispiel 14

Ansatz:

| | | |
|---|---|---|
| 945 | g | Adipinsäure - Butandiol - Polyester (MG: 2250) |
| 137,5 | g | Polypropylenoxid - Polyäther, gestartet auf Bisphenol A (MG: 550) |
| 128,7 | g | Polyäther aus 15% Propylenoxid und 85% Äthylenoxid, gestartet auf n-Butanol (MG: 2145) |
| 488,4 | g | Isophorondiisocyanat |
| 80,4 | g | Dimethylolpropionsäure |
| 50 | g | Triäthylamin |
| 200,4 | g | Ketimin aus Isophorondiamin und Methyl-isobutylketon (Aminogruppen zu 98% blockiert) |
| 4300 | g | entionisiertes Wasser |

Durchführung:

Zu dem bei 120°C im Vakuum entwässerten Gemisch aus dem Polyester und den beiden Polyäthern gibt man bei 70°C das Isophorondiisocyanat und rührt bei 100°C, bis ein NCO-Wert von 7,4% erreicht ist. Dann kühlt man weider auf 70% ab, rührt die Dimethylolpropionsäure ein und läßt das Präpolymer bei der gleichen Temperatur ausreagieren. Nach Erreichen des theoretischen NCO-Gehaltes von 4,2% gibt man nacheinander das Triäthylamin und das Bis-Ketimin zu und läßt in das gut gerührte Gemisch Wasser einlaufen. Es entsteht eine Dispersion mit einem Feststoffgehalt von 30% und einer Fordbecherviskosität (4 mm Düse) von 12 Sekunden. Die Dispersion zeigt im durchscheinenden Licht einen Tyndall-Effekt.

Beispiel 15

Ansatz:

| | | |
|---|---|---|
| 1012,5 | g | Adipinsäure - Butandiol - Polyester (MG: 2250) |
| 137,5 | g | Polypropylenoxid - Polyäther, gestartet auf Bisphenol A (MG: 550) |
| 488,4 | g | Isophorondiisocyanat |
| 71,4 | g | N-Methyl-diäthanolamin |
| 75,6 | g | Dimethylsulfat |
| 166,8 | g | Ketimin aus Isophorondiamin und Methyläthyl keton (Aminogruppen zu 90% blockiert) |
| 4200 | g | entionisiertes Wasser |

Durchführung:

Zu dem bei 120°C im Vakuum entwässerten Gemisch aus dem Polyester und dem Polyäther gibt man bei 60°C das Isophorondiisocyanat und tropft dann das N-Methyl-diäthanolamin zu. Anschließend wird bei 100°C gerührt, bis ein NCO-Wert von 4,4% erreicht ist. Man kühlt das Präpolymer auf 60°C ab, gibt das Dimethylsulfat zu und rührt zur Vervollständigung der Quaternierungsreaktion 30 Minuten bei der gleichen Temperatur nach. Dann gibt man das Bis-Ketimin zu und läßt in das gut gerührte Gemisch Wasser einlaufen.

Es entsteht eine Dispersion mit einem Feststoffgehalt von 30% und einer Fordbecherviskosität (4 mm Düse) von 13 Sekunden. Die Dispersion zeigt im durchscheinenden Licht einen Tyndall-Effekt.

Beispiel 16

Ansatz:

| | | |
|---|---|---|
| 945 | g | Adipinsäure - Butandiol - Polyester (MG: 2250) |
| 192,5 | g | Polypropylenoxid - Polyäther, gestartet auf Bisphenol A (MG: 550) |
| 128,7 | g | Polyäther aus 15% Propylenoxid und 85% Äthylenoxid, gestartet auf n-Butanol (MG: 2145) |
| 488,4 | g | Isophorondiisocyanat |
| 47,6 | g | N-Methyl-diäthanolamin |
| 50,4 | g | Dimethylsulfat |
| 194,6 | g | Ketimin aus Isophorondiamin und Methyläthylketon (Aminogruppen zu 90% blockiert) |
| 4500 | g | entionisiertes Wasser |

Durchführung:

Zu dem bei 120°C im Vakuum entwässerten Gemisch aus dem Polyester und den beiden Polyäthern gibt man bei 60°C das Isophorondiisocyanat und tropft dann das N-Methyl-diäthanolamin zu. Anschließend wird bei 100°C gerührt, bis ein NCO-Wert von 4,7% erreicht ist. Man kühlt das Präpolymer auf 60°C ab, gibt das Dimethylsulfat zu und rührt zur Vervollständigung der Quaternierungsreaktion 30 Minuten bei der gleichen Temperatur nach. Dann gibt man das Bis-Ketimin zu und läßt in das gut gerührte Gemisch Wasser einlaufen. Es entsteht eine Dispersion mit einem Feststoffgehalt von 30% und einer Fordbecherviskosität (4 mm Düse) von 16 Sekunden. Die Dispersion zeigt im durchscheinenden Licht einen Tyndall-Effekt.

Beispiel 17

Ansatz:

| | | |
|---|---|---|
| 1560 | g | Polyester aus Adipinsäure, Äthylenglykol, Butandiol-1,4, und Diäthylenglykol (MG: 2000) |
| 85,8 | g | Polyäther aus 15% Propylenoxid und 85% Äthylenoxid, gestartet auf n-Butanol (MG: 2145) |
| 85,2 | g | propoxyliertes Addukt aus 2-Butendiol-1,4 und $NaHSO_3$ (MG: 425) |
| 369,6 | g | Hexamethylen(1,6)-diisocyanat |
| 250,2 | g | Ketimin aus Isophorondiamin und Methyl-äthylketon (Aminogruppen zu 90% blockiert) |
| 5050 | g | entionisiertes Wasser |

Durchführung:

Zu dem bei 120°C im Vakuum entwässerten Gemisch aus Polyester, Polyäther und Bisulfitaddukt gibt man bei 70°C das Hexamethylen(1,6)-diisocyanat und rührt bei 100°C, bis ein NCO-Wert von 4,8% erreicht ist. Dann

kühlt man das Präpolymer auf 40°C ab und gibt das Bis-Ketimin zu. Das homogene Gemisch wird anschließend unter gutem Rühren in das vorgelegte entionisierte Wasser eingegossen.

Es entsteht eine Dispersion mit einem Feststoffgehalt von 30% und einer Fordbecherviskosität (4 mm Düse) von 14 Sekunden. Die Dispersion zeigt im durchscheinenden Licht einen Tyndall-Effekt.

**Patentansprüche**

1. Verfahren zur Herstellung von wäßrigen Lösungen oder Dispersionen von Polyurethan-Polyharnstoffen durch Umsetzung von chemisch eingebaute hydrophile Gruppierungen und/oder externe, nicht chemisch gebundene Emulgatoren enthaltenden mindestens 2 freie Isocyanatgruppen aufweisenden Präpolymeren mit mindestens 2 primäre und/oder sekundäre Aminogruppen aufweisenden organischen Verbindungen in wäßriger Phase, dadurch gekennzeichnet, daß man das hydrophil modifizierte und/oder einen externen Emulgator enthaltende Isocyanatgruppen aufweisende Präpolymere in Abwesenheit von Wasser mit Verbindungen vermischt, welche höchstens eine freie primäre oder sekundäre Aminogruppe und mindestens eine blockierte, unter dem Einfluß von Wasser eine freie primäre oder sekundäre Aminogruppe bildende Gruppe und insgesamt mindestens zwei zumindest teilweise blockierte primäre und/oder sekundäre Aminogruppen aufweisen, und man anschließend dieses Gemisch mit Wasser vermischt.

2. Verfahren gemäß Anspruch 1, dadurch gekennzeichnet, daß Art und Mengenverhältnisse der Reaktionspartner so gewählt werden, daß für jede Isocyanatgruppe des Isocyanatgruppen aufweisenden Präpolymeren 0,25 bis 1,5 gegenüber Isocyanatgruppen reaktionsfähige zumindest teilweise blockierte Aminogruppen vorliegen.

3. Verwendung der gemäß Anspruch 1 und 2 hergestellten Dispersionen oder Lösungen zur Beschichtung von flexiblen Substraten.

**Revendications**

1. Procédé de préparation de solutions ou dispersions aqueuses de polyuréthanne-polyurée par réaction de pré-polymères portant au moins deux groupes d'isocyanate libres et contenant des groupements hydrophiles incorporés chimiquement et/ou des agents émulsionnants externes non incorporés chimiquement, avec des composés organiques portant au moins deux groupes amino primaires et/ou secondaires en phase aqueuse, ce procédé se caractérisant en ce que l'on mélange le prépolymère portant des groupes isocyanate, à modification hydrophile et/ou contenant un agent émulsionnant externe, en l'absence d'eau, avec des composés qui portent au maximum un groupe amino primaire ou secondaire libre et au moins un groupe bloqué, donnant sous l'action de l'eau un groupe amino primaire ou secondaire libre, et au total, au moins deux groupes amino primaires et/ou secondaires bloqués en partie au moins, après quoi on mélange avec de l'eau.

2. Procédé selon la revendication 1, caractérisé en ce que l'on choisit la nature et les proportions relatives des réactifs en sorte que, pour chaque groupe isocyanate du prépolymère portant des groupes isocyanate, on dispose de 0,25 à 1,5 groupe, bloqué en partie au moins, et réactif à l'égard des groupes isocyanate.

3. Utilisation des dispersions ou solutions préparées par un procédé selon les revendications 1 et 2 pour le revêtement de supports flexibles.

**Claims**

1. Process for the preparation of aqueous solutions or dispersions of polyurethane polyureas by the reaction of prepolymers which have at least two free isocyanate groups and contain chemically fixed hydrophilic groups and/or external emulsifiers which are not chemically fixed, with organic compounds containing at least two primary and/or secondary amino groups, in the aqueous phase, characterised in that the prepolymer containing isocyanate groups, which prepolymer is hydrophilically modified and/or contains an external emulsifier, is mixed, in the absence of water, with compounds which have at the most one free primary or secondary amino group and at least one blocked group from which a free primary or secondary amino group is formed by the action of water, and a total of at least two at least partially blocked primary and/or secondary amino groups, and the mixture obtained is subsequently admixed with water.

2. Process according to claim 1, characterised in that the nature and proportions of the reactants are chosen so that from 0.25 to 1.5 at least partially blocked amino groups which are reactive with isocyanate groups are present for each isocyanate group of the prepolymer containing isocyanate groups.

3. The use of the dispersions or solutions obtained according to claims 1 and 2 for coating flexible substrates.